Europäisches Patentamt

European Patent Office

Office européen des brevets

(11) Publication number: **0 626 391 A1**

## EUROPEAN PATENT APPLICATION

(21) Application number: **93108438.8**

(22) Date of filing: **25.05.93**

(51) Int. Cl.5: **C08B 1/02**, C08B 3/06

(43) Date of publication of application:
**30.11.94 Bulletin 94/48**

(84) Designated Contracting States:
**DE FR GB**

(71) Applicant: **DAICEL CHEMICAL INDUSTRIES, LTD.**
**1, Teppo-cho**
**Sakai-shi, Osaka (JP)**

(72) Inventor: **Saka, Shiro**
**3314, Konookacho**
**Ohtsu-shi, Shiga (JP)**
Inventor: **Matsumura, Hiroyuki**
**Daicel Kinugakeryo 2-405,**
**940, Shinzaike**
**Aboshi-ku, Himeji-shi, Hyogo (JP)**

(74) Representative: **Patentanwälte Grünecker,**
**Kinkeldey, Stockmair & Partner**
**Maximilianstrasse 58**
**D-80538 München (DE)**

(54) **Process for producing cellulose acetate.**

(57) A process for producing cellulose acetate having excellent filterability, transparency and spinnability with the use of a a low grade pulp as the raw material, which comprises (1) using wood pulp of an α-cellulose content of 85 to 93% by weight as the cellulosic material, disintegrating the pulp and pretreating the disintegrated pulp with a solution containing 0 to 20 parts by weight, based on 100 parts by weight of the disintegrated pulp, of an acetylation catalyst and a desired amount of acetic acid; (2) further adding the acetylation catalyst, if necessary, to adjust the amount of the catalyst in the acetylating system to 0.5 to 20 parts by weight based on 100 parts by weight of the disintegrated pulp and effecting acetylation; and (3) subsequently effecting hydrolysis.

Rank Xerox (UK) Business Services
(3. 10/3.09/3.3.4)

Background of the Invention

Field of the Invention

The present invention relates to a process for producing cellulose acetate, more particularly, to a process for producing cellulose acetate with the use of a low grade wood pulp sheet as the cellulosic material.

Description of the Related Art

Cellulose acetate, which is one of organic acid esters of cellulose and has been widely used in, for example, clothing fabrics, cigarette filter tips, plastics, films and coatings, has the largest output among cellulose derivatives and is highly important industrially.

As a typical example of processes for industrially producing cellulose acetate, the so-called acetic acid process with the use of acetic anhydride as the acetylating agent, acetic acid as a diluent and sulfuric acid as a catalyst may be cited.

Now the acetic acid process for producing cellulose acetate will be briefly described. This process comprises (1) a pretreatment step wherein a pulp material having a relatively high $\alpha$-cellulose content is disaggregated and disintegrated, and acetic acid is sprayed thereon and mixed therewith; (2) an acetylation step wherein the pulp pretreated in the above step (1) is reacted with a mixed acid comprising acetic anhydride, acetic acid and an acetylation catalyst such as sulfuric acid; (3) a ripeness step wherein cellulose acetate is hydrolyzed to thereby give cellulose acetate of the desired degree of acetylation; and (4) an aftertreatment step wherein the ripe cellulose acetate is separated from the reaction mixture by precipitating, purified, stabilized and dried.

There have been reported a number of techniques for improving these basic steps as described above from various viewpoints. The present invention relates to a process for producing cellulose acetate by using low grade wood pulp. From this point of view, the prior arts may be summarized as follows.

In U.S. Patent No. 3,767,642 (published on October 23, 1973, Assignee; CELANESE CORPORATION), wood pulp of an $\alpha$-cellulose content of 92 to 93% is subjected to a so-called slurry pretreatment by disintegrating into a slurry in a diluted aqueous solution of acetic acid and repeating dehydration and replacement with acetic acid. After acetylating by a known method, the sulfuric acid catalyst in the reaction system is completely neutralized and the reaction mixture is saponified and ripened at 125 to 170°C, thus giving cellulose acetate which is excellent in transparency, filterability and spinnability.

U.S. Patent No. 4,306,060 (published on Dec. 15, 1981, Assignee; Daicel Chemical Industries, Ltd.) discloses a process which comprises disintegrating a high grade pulp having a high $\alpha$-cellulose content by an ordinary dry method, conducting acetylation at a high temperature with the use of a small amount of sulfuric acid as the catalyst to complete the acetylation within a short period of time, completely neutralizing the sulfuric acid catalyst in the system, and effecting saponification and ripeness at 110 to 120°C, thus giving cellulose acetate being excellent in transparency, filterability and spinnability. It is described therein that this technique is also applicable to a low grade pulp having a low $\alpha$-cellulose content.

A characteristic common to the above-described processes is that the saponification and ripeness are effected at a high temperature. The saponification and ripeness at such a high temperature accelerate the breakage or a deformation of acetylated hemicellulose which otherwise deteriorates various characteristics of cellulose acetate, to thereby make it harmless.

As the cellulosic material for producing cellulose acetate, there has been employed a high grade pulp having a high $\alpha$-cellulose content.

It is generally conceivable that a high grade cellulosic material with a reasonable price or cost should become hardly available due to the worldwide limitation of the resources and environmental pollution problems caused by pulp manufacturing plants. Although the above-mentioned techniques for producing cellulose acetate with the use of a low grade pulp suit these circumstances, it is difficult to conduct these processes in an industrial scale in practice.

More specifically, a low grade pulp having a low $\alpha$-cellulose content contains a larger amount of hemicellulose than a high grade one because of its inherent purpose of utilization. Therefore, cellulose acetate obtained from the low grade pulp by the conventional acetic acid process contains a large amount of insoluble fibers, which makes the final product unusable.

Disclosure of the Invention

Summary of the Invention

The present inventors have separated and recovered a large amount of insoluble fibers remaining in cellulose acetate obtained by acetylating a low grade pulp having a low $\alpha$-cellulose content and examined the same, thus clarifying that the insoluble residue is an associate consisting of cellulose triacetate and glucomannan triacetate. Further, they have prepared glucomannans differing in molecular weight from each other and mixed with cellulose at a given ratio to determine insoluble residues. As a result, it has been found that the amount of the insoluble residue is reduced with a decrease in the molecular weight of the employed glucomannan.

Based on these findings, the present inventors have studied a method for selectively depolymerizing glucomannan contained in a low grade pulp having a low $\alpha$-cellulose content. They have consequently found that the amount of the insoluble residue can be reduced while not removing glucomannan from the reaction mixture but maintaining the same therein and thus cellulose acetate being excellent in filterability, transparency and spinnability can be obtained from a low grade pulp having an $\alpha$-cellulose content extremely lower than that of the pulp conventionally employed in the art by specifying the total amount of the acetylation catalyst to be used in both the pretreatment and the acetylation, thus completing the present invention.

Accordingly, the present invention provides a process for producing cellulose acetate by conducting disintegration of a cellulosic material, pretreatment, acetylation and then hydrolysis, characterized by using a wood pulp of an $\alpha$-cellulose content ranging from 85 to 93% by weight as the cellulosic material, treating the wood pulp with an acetic acid solution containing from 0 to 20 parts by weight, based on 100 parts by weight of the wood pulp, of an acetylation catalyst as pretreatment, and then conducting acetylation while, if necessary, adding the acetylation catalyst so as to adjust the amount of the catalyst in the acetylation system to from 0.5 to 20 parts by weight based on 100 parts by weight of the wood pulp.

In other words, the present invention relates to a process for producing cellulose acetate which comprises using a wood pulp having an $\alpha$-cellulose content of from 85 to 93% by weight as a cellulosic material, disintegrating the wood pulp. pretreating the disintegrated wood pulp with acetic acid or a mixed acid comprising acetic acid and from above 0 to below 0.5 parts by weight, based on 100 parts by weight of the disintegrated wood pulp, of an acetylation catalyst, conducting acetylation of cellulose while adding the acetylation catalyst so as to adjust the amount of the catalyst in the acetylation system to from 0.5 to 20 parts by weight based on 100 parts by weight of the disintegrated wood pulp and hydrolyzing the cellulose acetate obtained; and another process for producing cellulose acetate which comprises using a wood pulp having an $\alpha$-cellulose content of from 85 to 93% by weight as a cellulosic material, disintegrating the wood pulp, pretreating the disintegrated wood pulp with a mixed acid comprising acetic acid and from 0.5 to 20 parts by weight, based on 100 parts by weight of the disintegrated wood pulp, of an acetylation catalyst, conducting acetylation of cellulose while, if necessary, further adding the acetylation catalyst so as to adjust the amount of the catalyst in the acetylation system to from 0.5 to 20 parts by weight based on 100 parts by weight of the disintegrated wood pulp and hydrolyzing the cellulose acetate obtained.

Further scope and the applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

Detailed Description of the Invention

The wood pulp to be used as the cellulosic material in the present invention is a low $\alpha$-pulp having an $\alpha$-cellulose content of from 85 to 93% by weight. The wood pulp is preferably a pulp sheet having a basis weight of 300 to 850 g/m$^2$, a density of 0.40 to 0.50 g/cm$^3$ and a bursting strength of 50 to 350 kPa, though the wood pulp used in present invention is not restricted thereto. Such wood pulp is treated on a disintegrator to thereby give fluffy disintegrated pulp.

The pretreatment of this disintegrated pulp is effected with acetic acid or a mixed acid comprising acetic acid and an acetylation catalyst. The acetic acid is preferably used in the form of glacial acetic acid. The acetylation catalyst may be arbitrarily selected from among, for example, sulfuric acid, perchloric acid and the like without restriction, so long as it can accelerate acetylation. It is preferable to select sulfuric acid therefor. The pretreatment step of the present invention is preferably effected by feeding the disintegrated pulp into a container provided with a stirrer, spraying 400 to 17,000 parts by weight, preferably 500 to 1,000 parts by weight, based on 100 parts by weight of the disintegrated pulp, of a mixed acid comprising glacial acetic acid and 0 to 20 parts by weight, preferably 0.5 to 10 parts by weight, based on 100 parts by weight of the disintegrated pulp, of sulfuric acid as a catalyst, on the disintegrated pulp, and stirring the obtained mixture of the pulp with the mixed acid present in the container hermetically closed at a temperature of 20 to 80°C for 0.5 to 4 hours.

In the conventional process for producing cellulose acetate, the cellulosic material is pretreated with acetic acid or a mixed acid comprising acetic acid and a sulfuric acid catalyst in order to allow cellulose fibers to swell in the acetic acid prior to the reaction so as to effect a smooth and uniform acetylation of the cellulose. On the other hand, in the present invention where a low grade wood pulp is used as the cellulosic material, this pretreatment aims at selectively depolymerizing hemicellulose, in particular glucomannan, which is more easily hydrolyzed with an acid than crystalline cellulose, for its object. By conducting this pretreatment step, the insoluble matters remaining after the completion of the acetylation can remarkably be reduced in the present invention. Regarding this point, the above-described depolymerizing is accelerated with an increase in the amount of the acetylation catalyst to be used in the pretreatment step, in particular, when sulfuric acid which is a strong acid is employed as the catalyst. However, the use of an excessively large amount of the catalyst results in considerable depolymerization of the cellulose. It is therefore preferable to use from 0.1 to 10 parts by weight of the acetylation catalyst in the pretreatment.

Subsequently, acetylation of cellulose is conducted. Acetylation is preferably conducted as follows: 150 to 800 parts by weight, preferably 200 to 400 parts by weight, based on 100 parts by weight of the disintegrated pulp, of acetic anhydride is added to the pretreated pulp, followed by mixing under stirring. When no or only a small amount, i.e. below 0.5 part by weight based on 100 parts by weight of the disintegrated pulp, of the acetylation catalyst is used in the pretreatment step, the catalyst is usually added together with the acetic anhydride in such a manner that the amount of the catalyst in the whole acetylating system will be 0.5 to 20 parts by weight based on 100 parts by weight of the disintegrated pulp.

Although the contents of the reactor, i.e., acetylator, generate heat by the reaction between water accompanying the fed pulp and the acetic anhydride and another reaction between cellulose and the acetic anhydride, the temperature is controlled so as to rise at a substantially constant rate for 20 to 60 minutes to the final temperature of 50 to 85°C, and then maintain at the final temperature for 3 to 20 minutes to thereby acetylate cellulose.

Next, the hydrolysis (saponification and, ripeness or aging) is effected. This reaction is preferably carried out by neutralizing the acetylation catalyst in the acetylation mixture, blowing steam into the system under elevated pressure of 1 to 10 kg/cm$^2$ to thereby adjust the temperature in the system to 125 to 170°C and maintaining the acetylation mixture within the temperature ranging from 125 to 170°C for 3 minutes to 6 hours, whereby acetyl groups in the cellulose acetate are hydrolyzed and cellulose acetate of the desired degree of acetylation can be obtained.

After the completion of the ripeness or hydrolysis, the reaction mixture is poured into a dilute aqueous solution of acetic acid. Thus, cellulose acetate is recovered as a precipitate. The recovered cellulose acetate is then washed, purified and dried.

Although the process according to the present invention employs a low grade pulp of a low α-cellulose content as the raw material, the process can provide cellulose acetate being excellent in transparency, filterability and spinnability.

Examples

To further illustrate the present invention in greater detail, and not by way of limitation, the following Examples will be given. Unless otherwise stated, parts given in these Examples are parts by weight, while % given therein is % by weight.

Examples 1 to 6 and Comparative Example 1

A dissolved pulp obtained by the sulfite process (α-cellulose content: 87.5%) was disintegrated in water in a household mixer, subjected to acetone substitution and then dried to give a disintegrated pulp having a moisture content of 5%. This pulp was fed into a pretreating apparatus, and 160 parts, based on 1 part of the disintegrated pulp having a moisture content of 5%, of mixed acid comprising glacial acetic acid and 0.1 part, based on 1 part of the disintegrated pulp having a moisture content of 5%, of a sulfuric acid catalyst was uniformly sprayed on the disintegrated pulp. The resultant mixture was mixed at 40°C for 2 or 4 hours, at 60°C for 1 or 2 hours or at 80°C for 1 or 2 hours to thereby effect the pretreatment. In Comparative

4

Example 1, no pretreatment was carried out.

Separately, 7 parts, based on 1 part of the disintegrated pulp having a moisture content of 5%, of acetic anhydride was prepared, the above-mentioned pretreated pulp was poured thereinto and the obtained mixture was mixed. After effecting a reaction at 40°C for 3 hours, insoluble matters as the insoluble residue were recovered by centrifuging (7,000 rpm, 30 minutes) the reaction mixture, washed with glacial acetic acid and water and dried. The supernatant obtained by the centrifugation was recovered and poured into a dilute acetic acid to separate cellulose acetate. The cellulose acetate as the soluble matter was recovered, washed with water sufficiently and dried. The cellulose acetate as the soluble matter and the insoluble matters as the insoluble residue both had a degree of acetylation of about 61%. The ratio (%) of the insoluble residue in the cellulose acetate thus obtained, that is, the weight of the insoluble residue x 100 / the total weight of the insoluble residue and the soluble matter, was calculated.

The results are given in Table 1. As these data with respect to the insoluble residue given in Table 1 show, primary cellulose acetate products having an improved filterability and a high transparency are obtained by conducting the pretreatment according to the present invention.

Table 1

| | Comp. Ex. | Ex. | | | | | |
|---|---|---|---|---|---|---|---|
| | 1 | 1 | 2 | 3 | 4 | 5 | 6 |
| Temperature in pretreatment (°C) | - | 40 | 40 | 60 | 60 | 80 | 80 |
| Pretreating time (h) | 0 | 2 | 4 | 1 | 2 | 1 | 2 |
| Insoluble residue (%) | 13.0 | 7.6 | 6.4 | 3.8 | 2.8 | 1.6 | 1.2 |

Example 7

A dissolved pulp obtained by the sulfite process ($\alpha$-cellulose content: 91.5%) was disintegrated with the use of an attrition mill. The fluffy disintegrated pulp thus obtained was dried so as to give a moisture content of 5%. After feeding this pulp into a pretreating apparatus, 500 parts, based on 100 parts of the disintegrated pulp having a moisture content of 5%, of mixed acid comprising glacial acetic acid and 1.0 part, based on 100 parts of the disintegrated pulp having a moisture content of 5%, of sulfuric acid was uniformly sprayed on the pulp and the resultant mixture was mixed at 60°C for 2 hours to thereby effect a pretreatment for reducing the molecular weight of glucomannan.

250 parts, based on 100 parts of the disintegrated pulp having a moisture content of 5%, of acetic anhydride, which had been cooled to 12°C, was placed in an acetylator of kneading type, the above-mentioned pretreated pulp was fed therein and the resultant mixture was mixed. Although heat was generated from the contents of the acetylator due to the reaction between water accompanying the fed pulp and the acetic anhydride and another reaction between cellulose and the acetic anhydride, the temperature of the contents was controlled by external cooling so as to reach a temperature of 77°C in 60 minutes from the starting temperature of around 16°C and then maintain at the temperature of 77°C for 12 minutes to thereby effect the acetylation.

Next, 10 parts, based on 100 parts of the disintegrated pulp having a moisture content of 5%, of a 20% aqueous solution of magnesium acetate was added and mixed to thereby completely neutralize the sulfuric acid in the reaction system and make the magnesium acetate excess therein. The completely neutralized reaction mixture was transferred into an autoclave, which was then hermetically closed, steam of a gauge pressure of 5 kg/cm$^2$ was blown thereinto while stirring the completely neutralized reaction mixture and the temperature of the mixture was elevated to 150°C in 60 minutes. After being maintained at 150°C for 50 minutes, the reaction mixture was gradually flashed under atmospheric pressure to lower the temperature of the reaction mixture to 100°C. Under vigorous stirring, a dilute aqueous solution of acetic acid was added to the reaction mixture to separate cellulose acetate as flakes, which were thoroughly washed with water, taken out and dried.

The flaky cellulose acetate thus obtained was a product which was excellent in filterability and spinnability and had a degree of acetylation of 55.2%, a viscosity of 20 seconds and a degree of filtration of 190.

The properties of the cellulose acetate were determined by the following methods.

Degree of acetylation: ASTM D-871 (1970).

Viscosity: time (sec) taken for a steel ball (diameter: 6.32 mm, weight: 1.043 g) to fall down for a distance of 10 cm in a tube (inner diameter: 25.9 mm), filled with a cellulose acetate solution prepared by dissolving cellulose acetate in a 96% aqueous solution of acetone to thereby give a cellulose acetate concentration of 20%, at 25±0.1 °C.

Degree of filtration: a 20% solution of cellulose acetate in a 96% aqueous solution of acetone described above was filtered through a prescribed filtering cloth at 30 °C under a given pressure and the amount of the filtrate passing through was measured. The degree of filtration, kw, was calculated in accordance with the formula:

$$kw = \frac{2 - P_2/P_1}{P_1 + P_2} \times 10^4,$$

wherein $P_1$ represents the amount (ml) of the filtrate obtained in 20 minutes from the initiation of the filtration; and $P_2$ represents the amount (ml) of the filtrate obtained in 40 minutes (from 20 to 60 minutes after the initiation of the filtration).

Comparative Example 2

The same dissolved pulp as the one used in Example 7 was employed as the raw material, and the same procedure as that of Example 7 was repeated, except that the pretreatment was effected by using 500 parts, based on 100 parts of the disintegrated pulp having a moisture content of 5%, of the mixed acid comprising glacial acetic acid and 25 parts, based on 100 parts of the disintegrated pulp having a moisture content of 5%, of sulfuric acid. The obtained flaky cellulose acetate had a degree of acetylation of 54.3% and a degree of filtration as good as 170, but had a viscosity as low as 11 sec, suggesting that it was disadvantageous in spinnability.

Comparative Example 3

The same dissolved pulp as the one used in Example 7 was employed as the raw material, and the same procedure as that of Example 7 was repeated, except that no pretreatment was effected and the acetylation catalyst, i.e., 1.0 part based on 100 parts of the disintegrated pulp having a moisture content of 5% of sulfuric acid, was added in the acetylating step. The obtained flaky cellulose acetate had a degree of acetylation of 54.1%, a viscosity of 21 sec, and a degree of filtration as high as 800, since it contained a large amount of gels and fibers.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. A process for producing cellulose acetate which comprises using a wood pulp having an α-cellulose content of from 85 to 93% by weight as a cellulosic material, disintegrating the wood pulp, pretreating the disintegrated wood pulp with acetic acid or a mixed acid comprising acetic acid and from above 0 to below 0.5 parts by weight, based on 100 parts by weight of the disintegrated wood pulp, of an acetylation catalyst, conducting acetylation of cellulose while adding the acetylation catalyst so as to adjust the amount of the catalyst in the acetylation system to from 0.5 to 20 parts by weight based on 100 parts by weight of the disintegrated wood pulp and hydrolyzing the cellulose acetate obtained.

2. The process for producing cellulose acetate as claimed in Claim 1, pretreating the disintegrated wood pulp with 400 to 17,000 parts by weight based on 100 parts by weight of the disintegrated wood pulp of glacial acetic acid or 400 to 17,000 parts by weight based on 100 parts by weight of the disintegrated wood pulp of a mixed acid comprising glacial acetic acid and from above 0 to below 0.5 parts by weight based on 100 parts by weight of the disintegrated wood pulp of an acetylation catalyst.

3. The process for producing cellulose acetate as claimed in Claim 1, conducting acetylation of cellulose with from 150 to 800 parts by weight based on 100 parts by weight of the disintegrated wood pulp of acetic anhydride.

4. The process for producing cellulose acetate as claimed in Claim 1, neutralizing the acetylation catalyst present in the acetylation system after the completion of the acetylation and hydrolyzing the cellulose acetate obtained by feeding steam into the system under elevated pressure while maintaining the temperature in the system to from 125 to 170°C.

5. The process for producing cellulose acetate as claimed in Claim 1, wherein the acetylation catalyst is sulfuric acid.

6. A process for producing cellulose acetate which comprises using a wood pulp having an α-cellulose content of from 85 to 93% by weight as a cellulosic material, disintegrating the wood pulp, pretreating the disintegrated wood pulp with a mixed acid comprising acetic acid and from 0.5 to 20 parts by weight, based on 100 parts by weight of the disintegrated wood pulp, of an acetylation catalyst, conducting acetylation of cellulose while, if necessary, further adding the acetylation catalyst so as to adjust the amount of the catalyst in the acetylation system to from 0.5 to 20 parts by weight based on 100 parts by weight of the disintegrated wood pulp and hydrolyzing the cellulose acetate obtained.

7. The process for producing cellulose acetate as claimed in Claim 6, pretreating the disintegrated wood pulp with 400 to 17,000 parts by weight based on 100 parts by weight of the disintegrated wood pulp of a mixed acid comprising glacial acetic acid and from 0.5 to 10 parts by weight based on 100 parts by weight of the disintegrated wood pulp of an acetylation catalyst.

8. The process for producing cellulose acetate as claimed in Claim 6, conducting acetylation of cellulose with from 150 to 800 parts by weight based on 100 parts by weight of the disintegrated wood pulp of acetic anhydride.

9. The process for producing cellulose acetate as claimed in Claim 6, neutralizing the acetylation catalyst present in the acetylation system after the completion of the acetylation and hydrolyzing the cellulose acetate obtained by feeding steam into the system under elevated pressure while maintaining the temperature in the system to from 125 to 170°C.

10. The process for producing cellulose acetate as claimed in Claim 6, wherein the acetylation catalyst is sulfuric acid.

11. A process for producing cellulose acetate by conducting disintegration of a cellulosic material, pretreatment, acetylation and then hydrolysis, characterized by using a wood pulp of an α-cellulose content ranging from 85 to 93% by weight as the cellulosic material, treating the wood pulp with an acetic acid solution containing from 0 to 20 parts by weight, based on 100 parts by weight of the wood pulp, of an acetylation catalyst as pretreatment, and then conducting acetylation while, if necessary, adding the acetylation catalyst so as to adjust the amount of the catalyst in the acetylation system to from 0.5 to 20 parts by weight based on 100 parts by weight of the wood pulp.

12. The process for producing cellulose acetate as claimed in Claim 11, wherein the hydrolysis is effected by neutralizing the acetylation catalyst present in the system, feeding steam into the system under elevated pressure and then carrying out the reaction within a temperature range of from 125 to 170°C.

| | European Patent Office | EUROPEAN SEARCH REPORT | Application Number |
|---|---|---|---|
| | | | EP  93 10 8438 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-807 093 (DECKER & HOLZ) <br><br> * the whole document * <br> --- | 1,3,5-7, 10,11 | C08B1/02 <br> C08B3/06 |
| X | DE-A-163 316 (L. LEDERER) <br><br> * page 1, line 67 - page 2, line 2; claim; examples * <br> --- | 6-8,10, 11 | |
| X | GB-A-397 638 (G. JAYME) <br><br> * claims; example * <br> --- | 6-8,10, 11 | |
| D,X | US-A-3 767 642 (K. C. CAMPBELL ET AL.) <br> * column 1, line 60 - column 2, line 6 * <br> * column 2, line 27 - line 49 * <br> * examples I,II * <br> --- | 6,9-12 | |
| A | GB-A-706 228 (CELANESE CORPORATION OF AMERICA) <br> * page 1, line 17 - line 44 * <br> * page 1, line 57 - line 74 * <br> * examples I,II * <br><br> ----- | 6,7,10, 11 | TECHNICAL FIELDS SEARCHED (Int. Cl.5) <br><br> C08B |

The present search report has been drawn up for all claims

| Place of search | Date of completion of the search | Examiner |
|---|---|---|
| THE HAGUE | 27 SEPTEMBER 1993 | MAZET Jean-François |